# FASCICULE DE BREVET EUROPEEN

(11) **EP 2 575 327 B1**
(45) Date de publication et mention de la délivrance du brevet: **15.05.2019**
(21) Numéro de dépôt: 12185912.8
(22) Date de dépôt: 25.09.2012
(51) Int. Cl.: H04L 29/08, G06F 9/455, G06F 9/50

(54) **PROCÉDÉ DE PARTAGE D'UNE APPLICATION WEB ENTRE PLUSIEURS TERMINAUX INFORMATIQUES RELIÉS À UN RÉSEAU DE COMMUNICATION**
VERFAHREN ZUR VERTEILUNG EINER WEB-ANWENDUNG AUF VERSCHIEDENE, MIT EINEM KOMMUNIKATIONSNETZ VERBUNDENE IT-ENDGERÄTE
METHOD FOR SHARING A WEB APPLICATION BETWEEN A PLURALITY OF COMPUTER TERMINALS CONNECTED TO A COMMUNICATION NETWORK

(30) Priorité: 30.09.2011 FR 1158867
(43) Date de publication de la demande: 03.04.2013
(73) Titulaire: Orange, 75015 Paris (FR)
(72) Inventeur: Ditini, Nabil, 22450 Troguery (FR); Fontaine, Benoit, 22560 Trebeurden (FR); Naudet, Laetitia, 22300 Lannion (FR)
(74) Mandataire: Cabinet Beau de Loménie

(56) Documents cités:
- US-A1- 2009 300 169
- US-A1- 2011 125 894
- NAYDEN MARKATCHEV ET AL: "A Cloud-Based Interactive Application Service", E-SCIENCE, 2009. E-SCIENCE '09. FIFTH IEEE INTERNATIONAL CONFERENCE ON, IEEE, PISCATAWAY, NJ, USA, 9 décembre 2009 (2009-12-09), pages 102-109, XP031610416, ISBN: 978-0-7695-3877-8

## Description

L'invention a trait de manière générale au partage d'applications entre divers systèmes informatiques connectés à un réseau de communication. Plus précisément, l'invention concerne le partage d'une application web entre plusieurs terminaux informatiques reliés à un réseau, une telle application web étant exécutée par un navigateur web dans un terminal informatique, au cours d'une session initiée par un utilisateur du terminal.

On entend ici par "application web" des applications logicielles accessibles *via* un navigateur web. De telles applications sont généralement développées sous forme de modules distincts, parfois appelées *Porlets*, *Widgets* ou simplement *Modules* en terminologie anglaise, et sont le plus souvent manipulables, grâce à un navigateur web, à l'intérieur d'une interface graphique associée telle qu'une fenêtre.

Le document de la technique antérieure "A Cloud-Based Interactive Application Service" de Nayden Markatchey et Al décrit des technologies de l'informatique dans le cloud offrant un accès transparent et à la demande aux applications servies sur Internet de manière dynamique et évolutive.

La présente invention s'applique notamment à un système dit « d'informatique en nuage » (traduction possible de l'anglais « *cloud computing* »), c'est-à-dire un système informatique qui permet notamment aux entreprises qui ne disposent pas de leurs propres serveurs, de stocker leurs données sur des serveurs qu'elles louent. Elles délèguent ainsi leurs opérations de calcul et de stockage à des prestataires bénéficiant d'infrastructures informatiques disséminées dans le monde entier et reliées entre elles par un réseau. L'accès à cette « informatique en nuage » se fait généralement *via* Internet, et dans ce contexte, un utilisateur accède à ses applications et ses données hébergées sur un serveur distant au travers d'un « bureau virtuel », *via* tout terminal connecté au réseau.

Il existe diverses solutions techniques de partage d'écran ou d'applications logicielles entre plusieurs dispositifs informatiques. L'une d'entre elles est connue sous l'acronyme VNC pour « *virtual network computing* » en anglais. VNC est un protocole d'accès à un bureau distant qui permet de prendre le contrôle d'un ordinateur distant. Il permet de transmettre les saisies au clavier ainsi que les clics de souris d'un ordinateur à l'autre, à travers un réseau informatique, en utilisant le protocole RFB (*Remote Frame Buffer*) qui est un protocole d'accès à distance aux interfaces graphiques des utilisateurs (GUI).

Le protocole VNC se compose de deux parties, un client et un serveur. Le serveur est le programme esclave sur la machine qui partage son écran, et le client (appelé aussi le *viewer*) est le programme maître qui regarde et interagit éventuellement avec le serveur. Par conséquent, comme beaucoup d'autres techniques de partage d'écran, les solutions basées sur le protocole VNC nécessitent l'installation d'une application logicielle sur l'ordinateur qui partage son écran et sur celui qui « regarde » à distance l'écran partagé.

Le fait d'avoir à installer une application spécifique de partage d'écran sur chaque ordinateur concerné, présente des inconvénients en termes de coût financier et de temps d'installation de l'application. Par ailleurs une telle technique n'est pas appropriée à un partage d'application entre plusieurs ordinateurs distants, dans le cadre d'un travail collaboratif par exemple. Enfin, avec la technique VNC, l'utilisateur qui partage son écran n'a pas la possibilité de garder le contrôle de son ordinateur pendant qu'un ordinateur distant a le contrôle sur son écran.

Ainsi, il existe ainsi un besoin de solutions techniques de partage d'applications qui permettent à un utilisateur de partager l'usage d'une application avec un ou plusieurs autres utilisateurs, sans nécessité d'installation spécifique de modules logiciels supplémentaires, et tout en permettant à l'utilisateur de l'ordinateur qui partage une application donnée, de garder le contrôle sur le reste de son environnement informatique, non partagé.

La présente vise notamment à répondre à ce besoin. A cet effet, selon un premier aspect, l'invention concerne un procédé de partage d'une application web entre plusieurs terminaux informatiques reliés à un réseau de communication, l'application web étant exécutée par un navigateur web d'un premier terminal informatique, au cours d'une première session initiée par un premier utilisateur. Conformément à l'invention, le procédé précité est caractérisé comme suit :
- dans le premier terminal, suite à une détermination préalable d'un ensemble de terminaux avec lequel partager l'application web, une requête de partage d'application est envoyée à destination d'un premier serveur sur le réseau, cette requête de partage d'application incluant l'adresse web de lancement de l'application web et des informations d'identification du premier utilisateur relatives à la première session ;
- en réponse à la réception de la requête de partage dans le premier serveur, un dispositif informatique prédéterminé sur le réseau lance une seconde session d'exécution de l'application web en utilisant les informations d'identification de session du premier utilisateur, la seconde session prenant comme état initial l'état d'exécution courant de la première session ;
- dans le dispositif informatique prédéterminé, un flux de données de type VNC est créé, ce flux correspondant aux données d'affichage de la seconde session d'exécution de l'application web ; puis
- le flux de données de type VNC est converti dans un format directement lisible par un navigateur web, et transmis à chacun des terminaux de l'ensemble de terminaux déterminés.

Ainsi, selon l'invention, la caractéristique selon laquelle une seconde session d'exécution de l'application à partager est lancée dans un dispositif informatique sur le réseau, distinct du premier terminal informatique dont l'utilisateur (« premier utilisateur ») est initiateur du partage de l'application web, permet à ce premier utilisateur de pouvoir garder le contrôle sur le reste de son environnement informatique (bureau virtuel). Par ailleurs, la caractéristique selon laquelle un flux de données directement lisible par un navigateur web (désigné ici par « flux de données web ») - en pratique par chargement d'une adresse web de type URL (*Uniform Resource Locator*) par le navigateur -, et correspondant aux données d'affichage de la seconde session d'exécution de l'application web partagée, est transmis à chacun des terminaux informatiques, permet d'éviter l'installation de logiciels additionnels dans l'ensemble des terminaux informatiques.

Selon une caractéristique de réalisation du procédé précité, le dispositif informatique susmentionné dans lequel la seconde session d'exécution de l'application web est lancée, est une machine virtuelle. Le lancement d'une seconde session d'exécution de l'application web dans cette machine virtuelle, est alors précédé par :
- l'envoi par le premier serveur d'une requête d'activation de machine virtuelle à destination d'un second serveur sur le réseau, la requête d'activation contenant l'adresse web de lancement de l'application web et lesdites informations d'identification de session du premier utilisateur ;
- en réponse à la réception de la requête d'activation de machine virtuelle par le second serveur, activation d'une machine virtuelle.

L'utilisation de machines virtuelles est particulièrement adaptée à un contexte de fourniture de logiciels à la demande ou « en tant que service » (en anglais *Software* as a *Service* - SaaS). En effet, la *virtualisation* consiste à faire fonctionner sur un seul ordinateur plusieurs systèmes d'exploitation comme s'ils fonctionnaient sur des ordinateurs distincts. On appelle serveur privé virtuel (*Virtual Private Server* ou VPS) ou encore environnement virtuel (*Virtual Environment* ou VE) ces ordinateurs virtuels. Les avantages liés à l'utilisation de machines virtuelles dans un contexte de fourniture de logiciels à la demande résident notamment dans une utilisation optimale des ressources d'un parc de machines (répartition des machines virtuelles sur les machines physiques en fonction des charges respectives) et dans l'allocation dynamique de la puissance de calcul en fonction des besoins de chaque application à un instant donné.

Selon un mode de réalisation particulier de l'invention, la seconde session d'exécution de l'application web est lancée par un navigateur web de la machine virtuelle activée, et la création, dans la machine virtuelle, d'un flux de données de type VNC correspondant aux données d'affichage de la seconde session d'exécution de l'application web, est mis en oeuvre par un module serveur VNC fournissant un flux VNC à partir des données d'affichage produites par le navigateur web de la machine virtuelle.

Dans ce mode de réalisation, l'étape de transmission du flux de données web à chacun des terminaux de l'ensemble de terminaux sélectionnés, comprend :
- dans ladite machine virtuelle, la conversion par un module de visualisation de flux VNC, du flux VNC fourni par ledit module serveur VNC, en un flux de données de type web accessible *via* une adresse web déterminée, dite adresse web d'accès ;
- l'envoi d'un message à chacun des terminaux informatiques de l'ensemble de terminaux sélectionnés, le message contenant ladite adresse web d'accès ;
- dans chacun des terminaux informatiques de l'ensemble de terminaux, la réception du message suivie du chargement de l'adresse web d'accès par un navigateur web.

Ainsi tout se passe comme si l'écran du terminal informatique du premier utilisateur, était déporté dans une machine virtuelle mise en oeuvre dans un serveur sur le réseau, et c'est le flux de données produit par le navigateur de la machine virtuelle qui fait l'objet d'un processus VNC global, c'est-à-dire, d'une part, la production d'un flux VNC (partie serveur VNC) à partir des données d'affichage de la seconde session d'exécution de l'application web ; puis d'autre part, la conversion du flux de données VNC en un flux de données web (partie cliente/*viewer* VNC). Chacun des terminaux informatiques choisis pour le partage de l'application web, peut alors recevoir le flux de données produit par le « visualisateur » (*viewer*) VMC de la machine virtuelle, simplement au moyen de son navigateur web.

Selon un deuxième aspect, l'invention concerne un serveur de gestion du partage d'applications web entre plusieurs terminaux informatiques sur un réseau de communication. Selon l'invention, un tel serveur comporte :
- des moyens de réception d'une requête de partage en provenance d'un terminal informatique dans lequel un navigateur web exécute une application web au cours d'une session initiée par un premier utilisateur, la requête de partage d'application incluant l'adresse web de lancement de l'application web, des informations d'identification du premier utilisateur relatives à ladite session ;
- des moyens de génération et d'envoi d'une requête d'activation de machine virtuelle à destination d'un second serveur, ladite requête d'activation contenant l'adresse de lancement de ladite application web et lesdites informations d'identification de session du premier utilisateur.

Corrélativement, selon un troisième aspect, l'invention concerne un serveur de gestion de machines virtuelles, ce serveur comportant :
- des moyens de réception d'une requête d'activation de machine virtuelle en provenance d'un serveur de gestion de partage d'applications web, tel que brièvement exposé ci-dessus ;
- des moyens d'activation d'une machine virtuelle, en réponse à la réception de la requête d'activation de machine virtuelle ;
- des moyens pour déclencher le lancement par un navigateur web dans la machine virtuelle activée, d'une nouvelle session d'exécution de l'application web, en utilisant les informations d'identification de session du premier utilisateur, la nouvelle session de l'application web prenant comme état initial l'état d'exécution courant de la session dans le premier terminal.

Selon un quatrième aspect, l'invention a aussi pour objet un système informatique dans lequel une machine virtuelle est configurée pour la mise en oeuvre d'un procédé de partage d'application tel que brièvement exposé plus haut. Une telle machine virtuelle selon l'invention comporte :
- un module serveur VNC adapté à fournir un flux VNC correspondant aux données d'affichage résultant d'une nouvelle session d'exécution de l'application web à partager, dans un navigateur web de la machine virtuelle ;
- un module de visualisation de flux VNC adapté à convertir le flux VNC fourni par le module serveur VNC, en un flux de données de type web directement lisible par un navigateur web et accessible *via* une adresse web d'accès déterminée, cette adresse web d'accès étant destinée à être chargée par un navigateur web dans chaque terminal informatique parmi un ensemble de terminaux informatiques, afin de partager l'exécution de ladite application web.

Enfin, selon un cinquième aspect, la présente invention a également pour objet un module logiciel comprenant des instructions de programme pour la mise en oeuvre d'un ensemble d'étapes parmi celles définies dans un procédé de partage d'applications web, selon l'invention, tel que brièvement défini plus haut, lorsqu'un tel module logiciel est exécuté dans un système informatique.

Un tel module logiciel peut utiliser n'importe quel langage de programmation, et comprendre des programmes sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement ou support d'informations lisible par un ordinateur, et comportant des instructions d'un programme d'ordinateur associé au module logiciel précité. Les supports d'enregistrement précités peuvent être constitués par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un tel support d'enregistrement peut être un support transmissible tel qu'un signal électrique ou optique, qui peut être acheminé *via* un câble électrique ou optique, par radio ou par d'autres moyens. Un module logiciel selon l'invention peut être en particulier téléchargé sur un réseau de type Internet.

Les avantages procurés par les serveurs, le système informatique, le module logiciel, tels que brièvement définis plus haut, selon respectivement les deuxième à cinquième aspects de l'invention, sont identiques ou contribuent à ceux mentionnés plus haut en relation avec le procédé de partage d'une application web, selon l'invention, et ne seront par conséquent pas rappelés ici.

D'autres caractéristiques et avantages de la présente invention ressortiront de la description détaillée faite ci-dessous, en référence aux dessins annexés qui en illustrent un exemple de réalisation dépourvu de tout caractère limitatif, et dans lesquels :
- les figures 1a et 1b illustrent le principe général d'un procédé de partage d'application, selon l'invention ;
- la figure 2 représente un système de communication bâti autour d'un réseau de communication de type Internet et dans lequel peut être mis en oeuvre un procédé de partage d'application, selon l'invention ; et
- la figure 3 représente sous forme d'organigramme les principales étapes d'un procédé de partage d'application, mis en oeuvre dans le système de communication représenté à la figure 2, selon un mode de réalisation de l'invention.

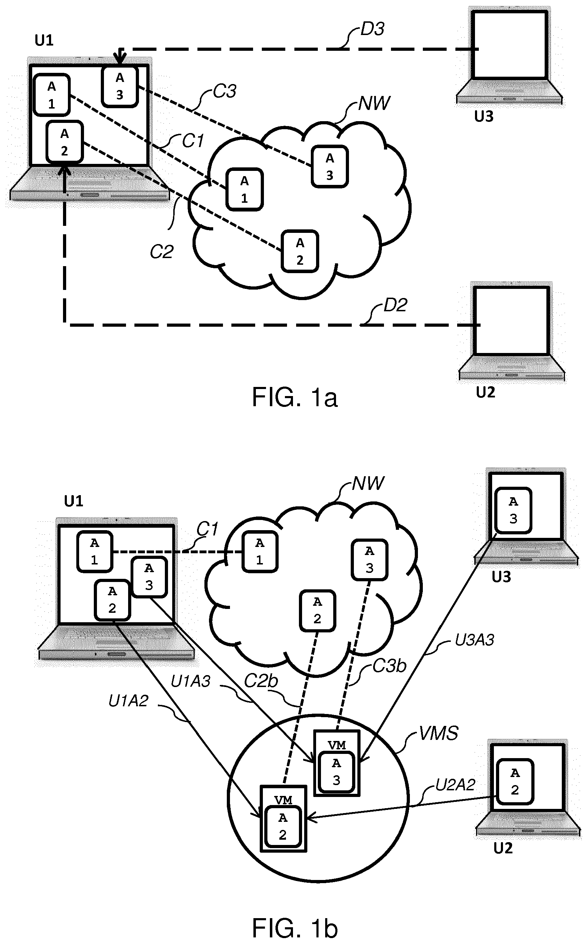

Les **figures 1a** et **1b** illustrent le principe général d'un procédé de partage d'application, selon l'invention.

Sur la **figure 1a**, trois terminaux informatiques U1, U2, U3 d'utilisateurs sont connectés un réseau NW de type Internet dans un contexte de *cloud computing* et plus précisément dans un contexte de logiciel en tant que service (SaaS). Les terminaux informatiques peuvent être de différents types, par exemple des ordinateurs personnels (PC), des tablettes tactiles, des téléphones intelligents (*smartphone* en anglais), notamment.

Dans l'exemple illustré, le terminal U1 accède à distance *via* un navigateur web simultanément à trois applications web A1, A2, A3, par exemple une suite bureautique constituée d'un tableur grapheur, d'un logiciel de traitement de texte, et d'un logiciel de présentation. Cette suite bureautique est fournie par un serveur de logiciels (non représenté) sur le réseau NW. Les flèches C1, C2, C3, correspondant respectivement aux trois applications précitées, indiquent que les applications dont le contenu d'exécution est affiché dans une fenêtre respective sur l'écran du terminal U1 sont exécutées à distance du terminal U1, dans un serveur distant connecté au réseau NW (« le nuage »). Les flèches D2 et D3 indiquent respectivement quel les utilisateurs des terminaux U2 et U3 ont fait une demande (ou ont été sélectionnés) pour partager avec l'utilisateur du terminal U1, respectivement, l'application A2 et l'application A3.

La **figure 1b** représente en conséquence la mise en partage des applications A2 et A3 exécutées lors d'une session initiée par l'utilisateur du terminal U1 avec les utilisateurs des terminaux U2 et U3. Comme représenté sur la fig. 1b, suite aux demandes de partage des applications A2 et A3 par respectivement les terminaux U2 et U3, deux machines virtuelles ont été activées par un serveur VMS pour lancer respectivement une seconde session d'exécution pour l'application A2 et pour l'application A3. L'exécution à distance des applications A2 et A3 par les machines virtuelles précitées est représentée par les deux traits en pointillé C2b et C3b.

Dans cet exemple, conformément à l'invention, l'application A2 est partagée entre les terminaux U1 et U2 par téléchargement respectif, auprès de la machine virtuelle concernée, du flux de données web représentatif de l'exécution de l'application A2 selon la seconde session d'exécution (flèches U1A2 et U2A2). De même, l'application A3 est partagée entre les terminaux U1 et U3 comme représenté par les flèches U1A3 et U3A3.

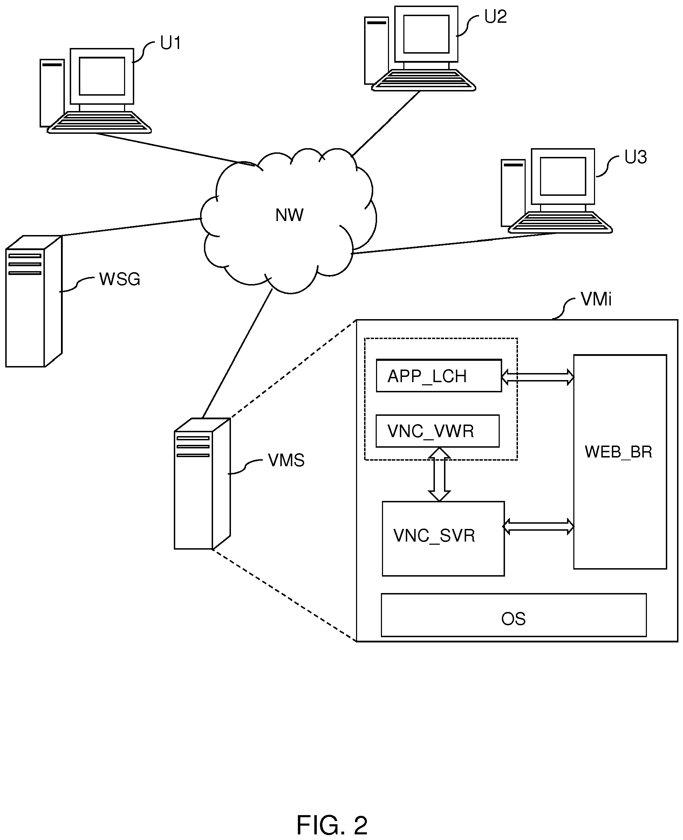

En référence à la **figure 2**, on va à présent décrire un système de communication bâti autour d'un réseau de communication de type Internet et dans lequel on peut mettre en oeuvre un procédé de partage d'application, selon un exemple de réalisation de l'invention. Sur la figure 2, on retrouve les trois terminaux U1, U2, U3 et un réseau de communication NW de type Internet, déjà mentionnés en référence aux figures 1a-1b.

Conformément à l'invention, ce système de communication comprend en outre un serveur WSG de gestion du partage d'applications web. Ce serveur WSG (« *workspace gate* ») fournit par exemple une plateforme de services accessible *via* un portail web dédié (on dit encore « page d'accueil ») dont l'adresse web (URL) est chargée par le navigateur web d'un terminal informatique considéré. Dans ce cas, un utilisateur de premier terminal U1 peut alors se connecter à une application web choisie sur la plateforme de services, après avoir saisi un identifiant d'utilisateur et un mot de passe dans une zone dédiée affichée par le portail. L'utilisateur du terminal U1 déclenche ainsi l'ouverture d'une session d'exécution de l'application web.

Le serveur WSG comprend par ailleurs un module de réception d'une requête de partage en provenance d'un terminal informatique dans lequel un navigateur web exécute une application web au cours d'une session d'utilisateur, comme exposé ci-dessus. Comme cela sera détaillé plus loin dans l'exposé, cette requête de partage d'application inclut l'adresse web de lancement de l'application web, des informations d'identification du premier utilisateur relatives à la session initiale, et des informations d'identification de chaque terminal parmi un ensemble de terminaux déterminés au préalable, par exemple sélectionnés par l'utilisateur du terminal U1.

Le serveur WSG comprend également un module de génération et d'envoi d'une requête d'activation de machine virtuelle à destination d'un second serveur - le serveur VMS sur la figure 2 - cette requête d'activation contenant l'adresse de lancement de l'application web à partager et les informations d'identification de session du premier utilisateur, c'est-à-dire l'utilisateur du terminal U1 dans l'exemple décrit.

Le serveur VMS (comme « *virtual machine server* ») représenté sur la figure 2 est un serveur de gestion de machines virtuelles. En effet, conformément à l'invention, il comprend un module de réception d'une requête d'activation de machine virtuelle, telle que mentionnée ci-dessus, en provenance du serveur WSG. En pratique, le serveur VMS dispose d'un espace mémoire interne ou peut accéder à un espace mémoire externe, par exemple hébergé dans un autre serveur, lequel espace mémoire stocke des modèles logiciels (*template* en anglais) de machines virtuelles, qui peuvent être sélectionnés en fonction de leur disponibilité puis activés. Le serveur VMS comprend par conséquent des moyens pour déclencher le lancement, par le navigateur web d'une machine virtuelle (VM) sélectionnée, d'une nouvelle session d'exécution de l'application web à partager, en utilisant les informations d'identification de session du premier utilisateur, ici l'utilisateur du terminal U1.

A cet effet, une machine virtuelle émulée dans un système informatique, en conformité avec l'invention, comprend un module APP_LCH qui reçoit une requête d'activation en provenance du serveur VMS et dont le traitement déclenche le lancement, par le navigateur web WEB_BR dans la machine virtuelle sélectionnée (VMi), d'une nouvelle session d'exécution de l'application web à partager.

Par ailleurs, la machine virtuelle, VMi, comprend un module serveur VNC (VNC_SVR) adapté à fournir un flux VNC correspondant aux données d'affichage, dans son navigateur web (VNC_BR), suite à l'exécution de l'application web (deuxième session). La machine virtuelle VMi comprend en outre un module de visualisation de flux VNC (VNC_VWR) adapté à convertir le flux VNC fourni par le module serveur VNC précité (VNC_SVR), en un flux de données directement lisible par un navigateur web extérieur à la machine virtuelle, c'est-à-dire accessible *via* une adresse web d'accès déterminée. Cette adresse web d'accès est destinée à être chargée par le navigateur web dans chaque terminal informatique (U2, U3) déterminé pour le partage de l'application web considérée. La machine virtuelle dispose enfin d'un module système d'exploitation OS, chargé notamment de gérer l'interopérabilité des différents modules composant la machine virtuelle et de gérer les entrées/sorties de données générées par ou reçues, dans la machine virtuelle.

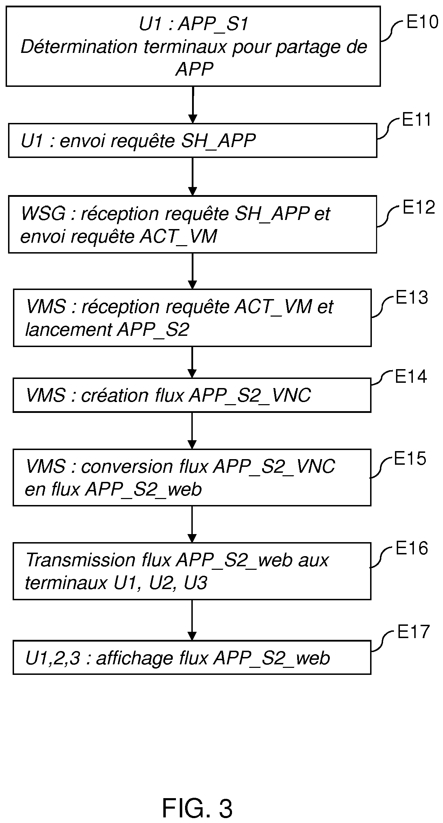

En liaison avec la **figure 3**, on va détailler à présent les principales étapes d'un procédé de partage d'application selon l'invention, mis en oeuvre dans le système de communication représenté à la figure 2. Afin de simplifier l'exposé, U1, U2, U3 désignent aussi bien les terminaux que leur utilisateur.

Le procédé de partage d'une application web selon l'invention commence ainsi par une étape **E10** au cours de laquelle, dans le terminal U1 (voir fig. 2), une application web désignée par APP est exécutée à distance depuis le terminal U1 et affiche des données d'exécution dans une interface graphique (par exemple une fenêtre) sur l'écran du terminal U1. Comme mentionné précédemment, l'exécution de l'application APP procède dans le mode de réalisation choisi, de l'ouverture par l'utilisateur du terminal U1 d'une première session (APP_S1) de communication avec un serveur distant (serveur WSG). Cette session d'exécution de l'application web est lancée suite au chargement d'une page HTML (*Hypertext Markup Language*) correspondant à un portail web donnant accès à des logiciels en ligne, par exemple un suite bureautique. A cette fin, l'utilisateur U1 a entré préalablement au clavier un identifiant d'utilisateur (UID) et un mot de passe (PW), dans des champs dédiés de la page HTML.

L'utilisateur U1 détermine ensuite un ensemble de terminaux (U2, U3) avec lequel partager l'application web APP. Selon un exemple de réalisation, la détermination de ces terminaux peut être effectuée à l'initiative de l'utilisateur U1, le portail web WSG affichant la liste d'utilisateurs inscrits dans la plateforme de services, cette liste incluant, le cas échéant, le ou les types de terminaux dont disposent les utilisateurs inscrits. L'utilisateur peut alors sélectionner les terminaux U2, U3, par exemple dans le cadre d'un travail collaboratif ou bien dans le cadre d'une séance de formation pour laquelle l'utilisateur U1 est le formateur. Selon un autre exemple de mise en oeuvre, ce sont les utilisateurs U2, U3 qui déclenchent l'envoi d'une requête de partage de l'application APP avec l'utilisateur U1, à destination du serveur WSG et ce dernier met à jour la page HTML du portail affichée à l'écran du terminal U1. L'utilisateur U1 peut alors donner suite aux requêtes de partage.

Selon un mode de réalisation particulier, lors de la sélection des autres terminaux d'utilisateurs pour le partage de l'application, l'utilisateur U1 peut en outre définir, pour chacun des utilisateurs sélectionnés, des droits d'accès relatifs à l'application web partagée, par exemple *lecture* ou *lecture-écriture.*

Suite à la sélection ou la validation par l'utilisateur U1 des terminaux U2 et U3 avec lesquels partager l'application, à l'étape **E11**, une requête HTTP (*HyperText Transfer Protocol*) de partage de l'application APP est envoyée par le terminal U1 à destination du serveur WSG. La requête de partage - désignée par SH_APP - inclut des informations permettant l'identification par le serveur WSG des terminaux sélectionnés, par exemple des identifiants de session de connexion de ces terminaux au portail web de la plateforme de services, de tels identifiants étant des identifiants conformes au protocole WebSocket, dans le mode de réalisation choisi.

La requête de partage SH_APP inclut également l'adresse web (URL) de lancement de l'application web APP et des informations d'identification du premier utilisateur U1 (UID et PW) et relatives à la première session APP_S1 d'utilisation de l'application (APP). Selon un exemple de réalisation, la requête de partage SH_APP prend la forme suivante : *https:*//*serviceDePartageOrange.com*/*ShareSevlet?url=www.app.com&login=martin&pwd=xwzy*

Dans cet exemple, '*www.app.com*' est l'adresse web d'accès à l'application web, '*martin*'est l'identifiant de l'utilisateur U1 et '*xwzy*' est son mot de passe.

De retour à la figure 3, à l'étape **E12**, le serveur WSG reçoit la requête de partage SH_APP, la traite et en conséquence génère et envoi à destination du serveur VMS, de gestion de machines virtuelles, une requête d'activation de machine virtuelle - désignée par ACT_VM -, et contenant l'adresse web de lancement de l'application web APP et les informations d'identification de session du premier utilisateur U1 (UID et PW).

On notera ici que les serveurs WSG et VMS ont été présentés comme étant distincts pour faciliter la compréhension de l'exposé, mais que selon un mode de réalisation particulier, le serveur VMS pourra être inclus dans le serveur WSG.

En pratique, le serveur WSG consulte *via* une interface de programmation applicative API (*Application Programing Interface*) en langage Java™, le serveur VMS de machines virtuelles, en sélectionne une, puis transmet au serveur VMS la requête d'activation de machine virtuelle ACT_VM, laquelle étant destinée à activer la machine virtuelle sélectionnée. On donne ci-après un exemple d'une telle requête d'activation de machine virtuelle (ACT_VM) : *https:*//*ipVMselected:8080*/*Launcher*/*LaunchApp?url=www.app.com&login=martin&pwd=xwzy*

Dans l'exemple de requête HTTP ci-dessus *'ipVMselected:8080*' identifie l'adresse IP de la machine virtuelle sélectionnée, '*Launcher*/*LaunchApp*' identifie le module APP_LCH de lancement d'application web, de la machine virtuelle sélectionnée (fig. 2 VMi) ; *'url=www.app.com&login=martin&pwd=xwzy'* identifie l'application APP par son adresse URL, avec les données d'identification du premier utilisateur U1 (*login* et *pwd*) nécessaires pour ouvrir une seconde session d'exécution de l'application APP pour l'utilisateur U1.

A l'étape **E13** (fig. 3), en réponse à la requête d'activation ACT_VM précitée, dans le serveur VMS, le module APP_LCH de la machine virtuelle sélectionnée (VMi) déclenche l'ouverture d'une seconde session d'exécution de l'application APP *via* son module de navigation web (WEB_BR). La machine virtuelle VMi activée envoie alors une réponse de type XML (*extensible Markup Language*) pour informer le serveur WSG de l'activation réussie de la machine virtuelle.

On notera ici que l'application APP relancée au travers d'une seconde session du même utilisateur permet d'ouvrir l'application APP dans l'état courant dans lequel elle se trouve dans le cadre de la première session en cours - il s'agit d'une caractéristique connue du type de plateforme de services SaaS visé par la présente invention.

A l'étape **E14**, dans la machine virtuelle activée (VMi) du serveur VMS, le module serveur VNC (VNC_SVR) crée un flux de données VNC, noté APP_S2_VNC, à partir du flux de données d'affichage d'exécution de l'application APP généré par le module navigateur web (WEB_BR), suite à l'ouverture de la seconde session.

A l'étape **E15**, le module VNC client VNC_VWR (VNC *viewer*) de la machine virtuelle convertit le flux VNC, APP_S2_VNC, fourni par le module serveur VNC (VNC_SVR), en un flux de données, noté APP_S2_web, accessible *via* une adresse web.

En pratique, le module VNC_VWR de la machine virtuelle utilise un composant Java™ apte à extraire du flux de données binaires fourni par le module VNC_SVR des données relatives à des images correspondant au résultat d'exécution de la l'application APP dans le navigateur de la machine virtuelle VMi. Ensuite ce flux de données d'images est transmis à une application de type *servlet* contenue dans le module VNC_VWR, qui l'insère dans une page web associée à une adresse web (URL) prédéterminée, par exemple en utilisant un élément HTML5 de type Canvas™. Cette page web résultante, mise à jour de manière continue avec le flux de données d'images issu du module de visualisation VNC (VNC_VWR), devient le flux de données APP_S2_web.

A l'étape **E16**, Le serveur WSG, « averti » précédemment de la réussite de l'activation de la machine virtuelle (voir plus haut, étape E13), construit de manière dynamique une URL pointant vers la page web précitée qui constitue le flux de données APP_S2_web, cette URL devenant par conséquent l'adresse web d'accès pour visualiser la seconde session d'exécution de l'application APP. L'adresse web d'accès au flux APP_S2_web, peut par exemple prendre la forme suivante :
*http:*//*ipVMselected:8080*/*VNC_VWR_VMi*/

Toujours à l'étape E16, le serveur WSG transmets un message aux différents terminaux U1, U2, U3 partageant l'application APP - par exemple un email - le message contenant l'URL d'accès à l'application web partagée, exécutée dans la machine virtuelle distante. Pour envoyer un message contenant l'adresse web d'accès, à chacun des terminaux sélectionnés, le serveur WSG peut utiliser les informations d'identification de chaque terminal sélectionné, contenues dans la requête de partage d'application reçue initialement.

A l'étape **E17**, les utilisateurs des différents terminaux U1-U3 peuvent alors ouvrir l'URL notifiée par message et ainsi partager l'exécution de l'application APP dont les données s'affichent sur leur écran respectif. On peut prévoir également que le chargement de l'URL d'accès à l'application partagée, peut être effectué de manière automatique dans les navigateurs des différents terminaux d'utilisateurs. En particulier, concernant le terminal U1 initiateur du partage de l'application, le remplacement de l'adresse web initiale d'accès à l'application web (première session) peut être automatiquement effectué dans la plateforme de service (serveur WSG) pour rediriger le navigateur du terminal U1 vers la deuxième session partagée, exécutée dans la machine virtuelle allouée pour le partage de l'application.

## Revendications

1. Procédé de partage d'une application web entre plusieurs terminaux informatiques reliés à un réseau de communication, ladite application web étant exécutée par un navigateur web dans un premier terminal informatique (U1), au cours d'une première session initiée par un premier utilisateur, le procédé étant **caractérisé en ce que** :
- dans le premier terminal (U1), suite à une détermination préalable d'un ensemble de terminaux (U2, U3) avec lequel partager ladite application web, une requête de partage d'application est envoyée (E11) à destination d'un premier serveur (WSG) sur le réseau, ladite requête de partage d'application incluant l'adresse web de lancement de ladite application web et des informations d'identification du premier utilisateur relatives à ladite première session ;
- en réponse à la réception (E12) de ladite requête de partage dans le premier serveur (WSG), un dispositif informatique prédéterminé sur le réseau lance (E13) une seconde session d'exécution de ladite application web en utilisant lesdites informations d'identification de session du premier utilisateur et ladite adresse web de lancement, ladite seconde session prenant comme état initial l'état d'exécution courant de la première session ;
- dans le dispositif informatique prédéterminé, un flux de données de type Virtual Network Computing est créé (E14), ce flux correspondant aux données d'affichage de la seconde session d'exécution de ladite application web, puis converti (E15) en un flux de données directement lisible par un navigateur web, dit flux de données web ; et,
- ledit flux de données web est transmis (E16) à chacun des terminaux dudit ensemble de terminaux déterminés,
dans lequel ledit dispositif informatique prédéterminé est une machine virtuelle (VMi), le lancement (E13) d'une seconde session d'exécution de ladite application web dans ledit dispositif informatique prédéterminé, étant précédé par :
- l'envoi par le premier serveur (WSG) d'une requête d'activation de machine virtuelle à destination d'un second serveur (VMS) sur le réseau, ladite requête d'activation contenant l'adresse web de lancement de ladite application web et lesdites informations d'identification de session du premier utilisateur ;
- en réponse à la réception de ladite requête d'activation de machine virtuelle par le second serveur (VMS), activation d'une machine virtuelle (VMi).

2. Procédé selon la revendication 1, dans lequel :
- la première session d'exécution de l'application web est lancée suite au chargement d'un portail web d'une plateforme de services par le navigateur web du premier terminal, puis à la connexion à ladite application web *via* la saisie par ledit premier utilisateur d'un identifiant d'utilisateur et d'un mot de passe, dans une zone dudit portail web ;
- la détermination d'un ensemble de terminaux avec lequel partager ladite application web comprend l'affichage dans ledit portail web d'une liste d'utilisateurs inscrits dans ledit portail web et la sélection d'un ou plusieurs utilisateurs parmi cette liste, ladite requête de partage d'application transmise audit premier serveur (WSG) contenant des informations d'identification de chaque terminal sélectionné.

3. Procédé selon l'une quelconque des revendications 1 à 2, dans lequel ladite seconde session d'exécution de ladite application web est lancée par un navigateur web (WEB_BR) de ladite machine virtuelle (VMi), et dans lequel la création, dans ladite machine virtuelle (VM), d'un flux de données de type Virtual Network Computing correspondant aux données d'affichage de la seconde session d'exécution de ladite application web, est mis en oeuvre par un module serveur VNC (VNC_SVR) fournissant un flux Virtual Network Computing à partir des données d'affichage produites par le navigateur web de ladite machine virtuelle.

4. Procédé selon la revendication 3, dans lequel l'étape de transmission dudit flux de données web à chacun des terminaux dudit ensemble de terminaux sélectionnés, comprend :
- dans ladite machine virtuelle, la conversion par un module (VNC_VWR) de visualisation de flux Virtual Network Computing, du flux Virtual Network Computing fourni par ledit module serveur VNC, en un flux de données de type web accessible *via* une adresse web déterminée, dite adresse web d'accès ;
- l'envoi d'un message à chacun des terminaux informatiques de l'ensemble de terminaux sélectionnés, ledit message contenant ladite adresse web d'accès ;
- dans chacun des terminaux informatiques dudit ensemble de terminaux, la réception du message suivie du chargement de l'adresse web d'accès par un navigateur web.

5. Procédé selon la revendication 4, dans lequel l'envoi d'un message contenant ladite adresse web d'accès, à chacun des terminaux sélectionnés, est effectué par ledit premier serveur (WSG), en utilisant des informations d'identification de chaque terminal sélectionné contenues dans ladite requête de partage d'application reçue par ledit premier serveur (WSG).

6. Procédé selon la revendication 2, dans lequel lors de la sélection par le premier utilisateur d'un ou plusieurs utilisateurs parmi la liste d'utilisateurs inscrits dans le portail web de la plateforme de services, le premier utilisateur définit en outre, pour chacun des utilisateurs sélectionnés, des droits d'accès relatifs à l'application web partagée.

7. Serveur (VMS) de gestion de machines virtuelles, **caractérisé en ce qu'**il comporte :
- des moyens de réception d'une requête d'activation de machine virtuelle en provenance d'un serveur de gestion (WSG) de partage d'applications web entre plusieurs terminaux informatiques sur un réseau de communication, ladite requête d'activation
étant générée par le serveur de gestion suite à la réception d'une requête de partage (E11) en provenance d'un terminal informatique dans lequel un navigateur web exécute une application web au cours d'une session initiée par un premier utilisateur (U1), ladite requête de partage d'application incluant l'adresse web de lancement de ladite application web, des informations d'identification du premier utilisateur relatives à ladite session et
contenant l'adresse de lancement de ladite application web et lesdites informations d'identification de session du premier utilisateur ;
- des moyens d'activation d'une machine virtuelle, en réponse à la réception de ladite requête d'activation de machine virtuelle ;
- des moyens pour déclencher le lancement par un navigateur web dans la machine virtuelle (VM)activée, d'une nouvelle session d'exécution de ladite application web, en utilisant lesdites informations d'identification de session du premier utilisateur et ladite adresse web de lancement, la nouvelle session de ladite application web prenant comme état initial l'état d'exécution courant de la session dans le premier terminal.

8. Système informatique dans lequel une machine virtuelle (VMi) est configurée pour la mise en oeuvre de l'étape de création (E14) d'un flux de données de type Virtual Network Computing et de l'étape de conversion (E15) du flux de données de type Virtual Network Computing en un flux de données directement lisible par un navigateur web du procédé selon l'une quelconque des revendications 1 à 6, ladite machine virtuelle étant **caractérisée en ce qu'**elle comporte :
- un module serveur VNC (VNC_SVR) adapté à fournir un flux Virtual Network Computing correspondant aux données d'affichage résultant d'une nouvelle session d'exécution de ladite application web dans un navigateur web de la machine virtuelle ;
- un module de visualisation de flux Virtual Network Computing (VNC_VWR) adapté à convertir le flux Virtual Network Computing fourni par ledit module serveur VNC, en un flux de données de type web directement lisible par un navigateur web et accessible *via* une adresse web d'accès déterminée, ladite adresse web d'accès étant destinée à être chargée par un navigateur web dans chaque terminal informatique parmi un ensemble de terminaux informatiques, afin de partager l'exécution de ladite application web.

9. Module logiciel comprenant des instructions de programme pour la mise en oeuvre d'un ensemble d'étapes parmi celles définies dans un procédé de partage d'applications web conforme à l'une quelconque des revendications 1 à 6, lorsque ledit module logiciel est exécuté dans un système informatique.

## Patentansprüche

1. Verfahren zum Teilen einer Webanwendung zwischen mehreren Computerendgeräten, die mit einem Kommunikationsnetz verbunden sind, wobei die Webanwendung von einem Webbrowser in einem ersten Computerendgerät (U1) während einer von einem ersten Benutzer eingeleiteten Sitzung ausgeführt wird, wobei das Verfahren **dadurch gekennzeichnet ist, dass**:
- in einem ersten Endgerät (U1), im Anschluss an eine vorangehende Bestimmung einer Gesamtheit von Endgeräten (U2, U3), mit der die Webanwendung geteilt werden soll, eine Anwendungsteilungsanfrage an einen ersten Server (WSG) im Netz gesendet wird (E11), wobei die Anwendungsteilungsanfrage die Start-Webadresse der Webanwendung und Identifikationsinformationen des ersten Benutzers, die sich auf die erste Sitzung beziehen, beinhaltet;
- in Reaktion auf den Empfang (E12) der Teilungsanfrage im ersten Server (WSG) eine vorbestimmte Rechenvorrichtung im Netz eine zweite Sitzung zur Ausführung der Webanwendung unter Verwendung der Sitzungs-Identifikationsinformationen des ersten Benutzers und der Start-Webadresse startet (E13), wobei die zweite Sitzung als Ausgangszustand den aktuellen Ausführungszustand der ersten Sitzung verwendet;
- in der vorbestimmten Rechenvorrichtung ein Datenstrom vom Typ Virtual Network Computing erzeugt wird (E14), wobei dieser Strom den Anzeigedaten der zweiten Sitzung zur Ausführung der Webanwendung entspricht, und anschließend in einen für einen Webbrowser direkt lesbaren Datenstrom, Webdatenstrom genannt, umgewandelt wird (E15); und
- der Webdatenstrom zu jedem der Endgeräte der Gesamtheit von bestimmten Endgeräten übertragen wird (E16),
wobei die vorbestimmte Rechenvorrichtung eine virtuelle Maschine (VMi) ist, wobei dem Starten (E13) einer zweiten Sitzung zur Ausführung der Webanwendung in der vorbestimmten Rechenvorrichtung vorangehen:
- das Senden, durch den ersten Server (WSG), einer Aktivierungsanforderung für die virtuelle Maschine an einen zweiten Server (VMS) im Netz, wobei die Aktivierungsanforderung die Start-Webadresse der Webanwendung und die Sitzungs-Identifikationsinformationen des ersten Benutzers enthält;
- in Reaktion auf den Empfang der Aktivierungsanforderung für die virtuelle Maschine durch den zweiten Server (VMS), die Aktivierung einer virtuellen Maschine (VMi).

2. Verfahren nach Anspruch 1, wobei:
- die erste Sitzung zur Ausführung der Webanwendung im Anschluss an das Laden eines Webportals einer Diensteplattform durch den Webbrowser des ersten Endgerätes und die anschließende Verbindung mit der Webanwendung über die Eingabe einer Benutzerkennung und eines Passworts durch den ersten Benutzer in einen Bereich des Webportals gestartet wird;
- die Bestimmung einer Gesamtheit von Endgeräten, mit denen die Webanwendung geteilt werden soll, das Anzeigen einer Liste von in dem Webportal registrierten Benutzern in dem Webportal und die Auswahl eines oder mehrerer Benutzer aus dieser Liste umfasst, wobei die an den ersten Server (WSG) übertragene Anwendungsteilungsanfrage Identifikationsinformationen jedes ausgewählten Endgerätes enthält.

3. Verfahren nach einem der Ansprüche 1 bis 2, wobei die zweite Sitzung zur Ausführung der Webanwendung von einem Webbrowser (WEB_BR) der virtuellen Maschine (VMi) gestartet wird, und wobei die Erzeugung, in der virtuellen Maschine (VMi), eines Datenstroms vom Typ Virtual Network Computing, der den Anzeigedaten der zweiten Sitzung zur Ausführung der Webanwendung entspricht, von einem VNC-Servermodul (VNC_SVR) durchgeführt wird, das ausgehend von den Anzeigedaten, die von dem Webbrowser der virtuellen Maschine erzeugt werden, einen Virtual Network Computing-Datenstrom liefert.

4. Verfahren nach Anspruch 3, wobei der Schritt der Übertragung des Webdatenstroms an jedes der Endgeräte der Gesamtheit von ausgewählten Endgeräten umfasst:
- in der virtuellen Maschine, die Umwandlung, durch ein Modul (VNC_VWR) zur Visualisierung von Virtual Network Computing-Datenströmen, des von dem VNC-Servermodul gelieferten Virtual Network Computing-Datenstroms in einen Datenstrom vom Typ eines Webdatenstroms, der über eine bestimmte Webadresse, Zugangswebadresse genannt, zugänglich ist;
- das Senden einer Nachricht an jedes der Computerendgeräte der Gesamtheit von ausgewählten Endgeräten, wobei die Nachricht die Zugangswebadresse enthält;
- in jedem der Computerendgeräte der Gesamtheit von Endgeräten, den Empfang der Nachricht, gefolgt vom Laden der Zugangswebadresse durch einen Webbrowser.

5. Verfahren nach Anspruch 4, wobei das Senden einer Nachricht, welche die Zugangswebadresse enthält, an jedes der ausgewählten Endgeräte durch den ersten Server (WSG) unter Verwendung von Identifikationsinformationen jedes ausgewählten Endgerätes durchgeführt wird, die in der durch den ersten Server (WSG) empfangenen Anwendungsteilungsanfrage enthalten sind.

6. Verfahren nach Anspruch 2, wobei bei der Auswahl, durch den ersten Benutzer, eines oder mehrerer Benutzer aus der Liste von in dem Webportal der Diensteplattform registrierten Benutzern der erste Benutzer außerdem für jeden der ausgewählten Benutzer Zugriffsrechte definiert, die sich auf die geteilte Webanwendung beziehen.

7. Server (VMS) zur Verwaltung virtueller Maschinen, **dadurch gekennzeichnet, dass** er aufweist:
- Mittel zum Empfang einer Aktivierungsanforderung für eine virtuelle Maschine von einem Server zur Verwaltung (WSG) des Teilens von Webanwendungen zwischen mehreren Computerendgeräten in einem Kommunikationsnetz, wobei die Aktivierungsanforderung von dem Verwaltungsserver im Anschluss an den Empfang einer Teilungsanfrage (E11) von einem Computerendgerät erzeugt wird, in welchem ein Webbrowser eine Webanwendung während einer von einem ersten Benutzer (U1) eingeleiteten Sitzung ausführt, wobei die Anwendungsteilungsanfrage die Start-Webadresse der Webanwendung, Identifikationsinformationen des ersten Benutzers, die sich auf die Sitzung beziehen, beinhaltet und die Startadresse der Webanwendung und die Sitzungs-Identifikationsinformationen des ersten Benutzers enthält;
- Mittel zur Aktivierung einer virtuellen Maschine in Reaktion auf den Empfang der Aktivierungsanforderung für eine virtuelle Maschine;
- Mittel zum Auslösen des Starts, durch einen Webbrowser in der aktivierten virtuellen Maschine (VMi), einer neuen Sitzung zur Ausführung der Webanwendung unter Verwendung der Sitzungs-Identifikationsinformationen des ersten Benutzers und der Start-Webadresse,
wobei die neue Sitzung der Webanwendung als Ausgangszustand den aktuellen Ausführungszustand der Sitzung im ersten Endgerät verwendet.

8. Computersystem, in welchem eine virtuelle Maschine (VMi) für die Durchführung des Schrittes der Erzeugung (E14) eines Datenstroms vom Typ Virtual Network Computing und des Schrittes der Umwandlung (E15) des Datenstroms vom Typ Virtual Network Computing in einen für einen Webbrowser direkt lesbaren Datenstrom des Verfahrens nach einem der Ansprüche 1 bis 6 eingerichtet ist, wobei die virtuelle Maschine **dadurch gekennzeichnet ist, dass** sie aufweist:
- ein VNC-Servermodul (VNC_SVR), das dafür ausgelegt ist, einen Virtual Network Computing-Datenstrom zu liefern, der den Anzeigedaten entspricht, die aus einer neuen Sitzung zur Ausführung der Webanwendung in einem Webbrowser der virtuellen Maschine resultieren;
- ein Modul zur Visualisierung von Virtual Network Computing-Datenströmen (VNC_VWR), das dafür ausgelegt ist, den von dem VNC-Servermodul gelieferten Virtual Network Computing-Datenstrom in einen Datenstrom vom Typ eines Webdatenstroms umzuwandeln, der für einen Webbrowser direkt lesbar ist und über eine bestimmte Zugangswebadresse zugänglich ist, wobei die Zugangswebadresse dazu bestimmt ist, durch einen Webbrowser in jedes Computerendgerät aus einer Gesamtheit von Computerendgeräten geladen zu werden, um die Ausführung der Webanwendung zu teilen.

9. Software-Modul, welches Programmanweisungen zur Durchführung einer Gesamtheit von Schritten von denjenigen, die in einem Verfahren zum Teilen von Webanwendungen gemäß einem der Ansprüche 1 bis 6 definiert sind, wenn das Software-Modul in einem Computersystem ausgeführt wird, umfasst.

## Claims

1. Method for sharing a Web application between several computing terminals linked to a communication network, said Web application being executed by a Web browser in a first computing terminal (U1), during a first session initiated by a first user, the method being **characterized in that**:
- in the first terminal (U1), further to a prior determination of a set of terminals (U2, U3) with which to share said Web application, an application sharing request is dispatched (E11) destined for a first server (WSG) on the network, said application sharing request including the launch Web address of said Web application and identification information identifying the first user and relating to said first session;
- in response to the receipt (E12) of said sharing request in the first server (WSG), a predetermined computing device on the network launches (E13) a second execution session of said Web application by using said session identification information of the first user and said launch Web address, said second session taking as initial state the current state of execution of the first session;
- in the predetermined computing device, a data stream of Virtual Network Computing type is created (E14), this stream corresponding to the display data of the second execution session of said Web application, and then converted (E15) into a data stream directly readable by a Web browser, termed Web data stream; and,
- said Web data stream is transmitted (E16) to each of the terminals of said set of determined terminals,
in which said predetermined computing device is a virtual machine (VMi), the launching (E13) of a second execution session of said Web application in said predetermined computing device being preceded by:
- the dispatching by the first server (WSG) of a virtual machine activation request destined for a second server (VMS) on the network, said activation request containing the launch Web address of said Web application and said session identification information of the first user;
- in response to the receipt of said virtual machine activation request by the second server (VMS), activation of a virtual machine (VMi).

2. Method according to Claim 1, in which:
- the first execution session of the Web application is launched subsequent to the loading of a Web portal of a service platform by the Web browser of the first terminal, and then to the connecting to said web application *via* the inputting by said first user of a user identifier and of a password, in an area of said Web portal;
- the determination of a set of terminals with which to share said Web application comprises the displaying in said Web portal of a list of users registered in said Web portal and the selecting of one or more users from among this list, said application sharing request transmitted to said first server (WSG) containing identification information identifying each selected terminal.

3. Method according to any one of Claims 1 to 2, in which said second execution session of said Web application is launched by a Web browser (WEB_BR) of said virtual machine (VMi), and in which the creation, in said virtual machine (VMi), of a data stream of Virtual Network Computing type corresponding to the display data of the second execution session of said Web application, is implemented by a VNC server module (VNC_SVR) providing a Virtual Network Computing stream on the basis of the display data produced by the Web browser of said virtual machine.

4. Method according to Claim 3, in which the step of transmitting said Web data stream to each of the terminals of said set of selected terminals, comprises:
- in said virtual machine, the conversion by a Virtual Network Computing stream viewing module (VNC_VWR), of the Virtual Network Computing stream provided by said VNC server module, into a data stream of Web type accessible *via* a determined Web address, termed access Web address;
- the dispatching of a message to each of the computing terminals of the set of selected terminals, said message containing said access Web address;
- in each of the computing terminals of said set of terminals, the receipt of the message, followed by the loading of the access Web address by a Web browser.

5. Method according to Claim 4, in which the dispatching of a message containing said access Web address, to each of the selected terminals, is performed by said first server (WSG), by using identification information identifying each selected terminal and contained in said application sharing request received by said first server (WSG).

6. Method according to Claim 2, in which during the selection by the first user of one or more users from among the list of users registered in the Web portal of the service platform, the first user furthermore defines, for each of the selected users, access rights relating to the shared Web application.

7. Server (VMS) for managing virtual machines, **characterized in that** it comprises:
- means for receiving a virtual machine activation request originating from a server (WSG) for managing sharing of Web applications between several computing terminals on a communication network, said activation request being generated by the managing server subsequent to the receipt of a sharing request (E11) originating from a computing terminal in which a Web browser executes a Web application during a session initiated by a first user (U1), said application sharing request including the launch Web address of said Web application, identification information identifying the first user and relating to said session and containing the launch address of said Web application and said session identification information of the first user;
- means for activating a virtual machine, in response to the receipt of said virtual machine activation request;
- means for triggering the launching by a Web browser in the activated virtual machine (VMi) of a new execution session of said Web application, by using said session identification information of the first user and said launch Web address,
the new session of said Web application taking as initial state the current state of execution of the session in the first terminal.

8. Computing system in which a virtual machine (VMi) is configured for the implementation of the step of creating (E14) a data stream of Virtual Network Computing type and the step of converting (E15) the data stream of Virtual Network Computing type into a data stream directly readable by a Web browser of the method according to any one of Claims 1 to 6, said virtual machine being **characterized in that** it comprises:
- a VNC server module (VNC_SVR) adapted to provide a Virtual Network Computing stream corresponding to the display data resulting from a new execution session of said Web application in a Web browser of the virtual machine;
- a Virtual Network Computing stream viewing module (VNC_VWR) adapted to convert the Virtual Network Computing stream provided by said VNC server module into a data stream of Web type directly readable by a Web browser and accessible *via* a determined access Web address, said access Web address being intended to be loaded by a Web browser into each computing terminal from among a set of computing terminals, so as to share the execution of said Web application.

9. Software module comprising program instructions for the implementation of a set of steps from among those defined in a method for sharing Web applications in accordance with any one of Claims 1 to 6 when said software module is executed in a computing system.
